# EUROPEAN PATENT SPECIFICATION

(11) **EP 2 620 877 B1**
(45) Date of publication and mention of the grant of the patent: **16.12.2015**
(21) Application number: 11826589.1
(22) Date of filing: 26.01.2011
(51) Int. Cl.: G06F 13/28, G06F 13/32

(54) **DMA CONTROLLER AND DATA READOUT DEVICE**
DMA-STEUERUNG UND DATENABLESEVORRICHTUNG
CONTRÔLEUR D'ACCÈS DIRECT À LA MÉMOIRE, ET DISPOSITIF D'EXTRACTION DE DONNÉES

(30) Priority: 21.09.2010 JP 2010210798
(43) Date of publication of application: 31.07.2013
(60) Divisional application: 14197840.3
(73) Proprietor: Mitsubishi Electric Corporation, Tokyo 100-8310 (JP)
(72) Inventor: NAKATA, Masanori, Tokyo 100-8310 (JP); KUSHIRO, Noriyuki, Tokyo 100-8310 (JP); ITO, Yoshiaki, Tokyo 100-8310 (JP); KOIZUMI, Yoshiaki, Tokyo 100-8310 (JP)
(74) Representative: Pfenning, Meinig & Partner GbR
(86) International application number: PCT/JP2011/051508
(87) International publication number: WO 2012/039143

(56) References cited:
- EP-A1- 0 716 378
- EP-A2- 0 837 397
- WO-A2-2008/024670
- JP-A- H0 696 006
- JP-A- H1 011 388
- JP-A- H03 156 659
- JP-A- H08 287 003
- JP-A- 2001 101 396
- US-A1- 2008 177 909

## Description

### Technical Field

The present invention relates to a technique of reading data from a readable/writable storage medium using a DMA (direct memory access) controller.

### Background Art

For example, the CPU of a device using a flash memory as a storage medium has to properly identify the location (a physical address) where desired data are stored in a memory region of the flash memory. However, when the memory region is large, the data search workload of the CPU is increased. Then, a known method for reducing the workload of the CPU uses a DMA controller to read data as disclosed in Patent Literature 1.

In such a case, the CPU sets an address from which reading starts (a reading start address) and a reading data size (for example, in bytes) in the reading start address register and reading data size register of a DMA controller. The DMA controller reads data of the specified number of bytes from the specified reading start address, outputs an interrupt signal, and ends the data reading operation.

As the above interrupt signal is output, the CPU checks whether the read data are desired data. Then, if the read data are not desired data, the CPU updates the value in the reading start address register and activates the DMA controller again so that the DMA controller reads data. From then on, the CPU repeats the above control until desired data are found.

### Prior Art Literature

EP 0 837 397 A2 discloses: A data transfer apparatus for DMA-transferring stream data between a memory and each of n ports. The data transfer apparatus includes: an address counter for storing a start address of a memory area between which and a port a next piece of stream data is DMA-transferred; a data counter for storing a size of the next piece of stream data; n chain address counters each for storing an address of a memory area storing a certain command list; a port selecting unit for selecting one port; a command list transferring unit for, each time the port selecting unit selects a port, obtaining a command list according to a chain address counter corresponding to the selected port, transferring a start address in the command list to the address counter, transferring a size in the command list to the data counter, transferring the command to the port selecting unit, and updates the chain address counter; a stream data transferring unit for DMA-transferring a piece of stream data between the selected port and the memory area specified by the address counter.

EP 0 716 378 A discloses: To execute a three-dimensional DMA transfer, a transfer counter register, which is partitioned into three sections, is loaded with initial counter values. Each section of the counter register is independently controlled by a counter. Data is transferred from consecutive generated addresses for a first predetermined number of times as determined by the value in the first section of the counter register. An offset value is then added to a last generated address. The process is repeated for a second predetermined number of times. Then another offset value is added to the generated address. This entire process is repeated for a given number of times.

DMA controllers comparing transfer data with data specified in advance and generating a notification in case of matching data are known from WO 2008/024670, US 2008/0177909 and JP 03156659.

### Patent Literature

Patent Literature 1: Unexamined Japanese Patent Application Kokai Publication No. 2005-100247.

### Disclosure of the Invention

### Problem to be Solved by the Invention

In the above case, if the CPU and DMA controller communicate frequently until desired data are found, the workload of the CPU is increased and the performance of the entire device may be deteriorated. On the other hand, if a large value is set in the reading data size register, the frequency of the CPU giving instructing to the DMA controller, namely the number of times of interruption, can be reduced. However, a large amount of non-desired data are read, which is inefficient.

An exemplary objective of the present invention is to provide a DMA controller and the like enabling efficient data reading from readable/writable recording media without increasing the workload of the CPU.

### Means for Solving the Problem

In order to achieve the above objective, the DMA controller according to a first exemplary aspect of the preset invention is a DMA controller reading data from a readable/writable storage medium, comprising:
a reading start address register storing a reading start address from which reading starts;
a reading data size register storing the size of data to be read in a single reading operation;
an offset value register storing an offset value for updating the reading start address after the reading operation ends;
a repetition upper limit value register storing the upper limit value of the number of times of repetition of the reading operation;
a repetition counter register storing the number of times of repetition of the reading operation; and
end notification means outputting a given interrupt signal indicating that the processing of the DMA controller ends when the value stored in the repetition counter register reaches the value stored in the repetition upper limit value register,
   wherein the end notification means further determines whether the data read in the reading operation match data specification in advance and, if the data match with each other, outputs the interrupt signal.

### Effects of the Invention

The present invention automatically updates the reading start address each time a reading operation ends, whereby efficient data reading is executed.

### Brief Description of Drawings

FIG. 1 is a block diagram showing the configuration of a data reading device comprising the DMA controller according to Embodiment 1 of the present invention;
FIG. 2 is a block diagram showing the configuration of the DMA controller according to Embodiment 1;
FIG. 3 is a flowchart showing the proceeding of the data reading procedure of Embodiment 1:
FIG. 4 is an illustration for explaining the update of the reading start address in Embodiment 1;
FIG. 5 is a block diagram showing the configuration of the DMA controller according to Embodiment 2 of the present invention;
FIG. 6 is a flowchart showing the proceeding of the data reading procedure of Embodiment 2:
FIG. 7 is a block diagram showing the configuration of the data reading device according to Embodiment 3 of the present invention;
FIG. 8 is an illustration for explaining sets of command parameters stored in the first internal memory in Embodiment 3;
FIG. 9 is an illustration for explaining the data reading mode by the external memory interface in Embodiment 3;
FIG. 10 is an illustration for explaining the second internal memory in Embodiment 3; and
FIG. 11 is a flowchart showing the proceeding of the data reading procedure of Embodiment 3.

### Mode for Carrying Out the Invention

Embodiments of the present invention will be described hereafter with reference to the drawings.

### (Embodiment 1)

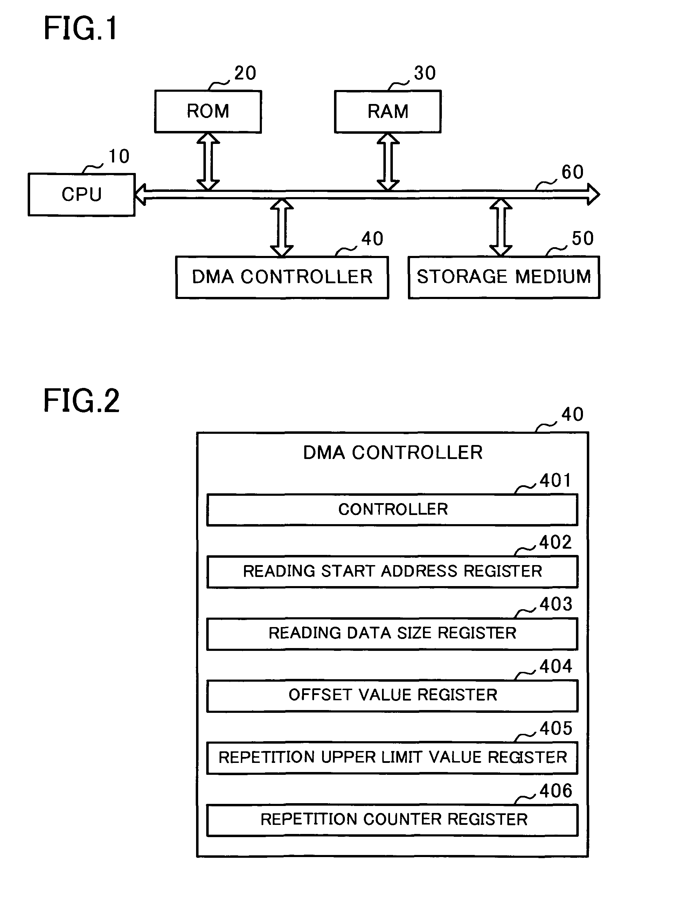

FIG. 1 is a block diagram showing the configuration of a data reading device comprising the DMA controller according to Embodiment 1 of the present invention. This data reading device is installed in a device that is, for example, connected to multiple power conditioners of a photovoltaic power generation system to collect data regarding the operation state of each power conditioner (so-called, a data logger).

As shown in FIG. 1, the data reading device comprises a CPU (central processing unit) 10, a ROM (read only memory) 20, a RAM (random access memory) 30, a DMA (direct memory access) controller 40, and a storage medium 50; these components are connected to each other via a bus 60.

The CPU 10 controls the operation of the entire device including the data reading device based on various programs and data stored in the ROM 20. The RAM 30 is used as a work memory in which data to be transferred to the storage medium 50 and read data are temporarily stored.

The DMA controller 40 access the storage medium 50 according to instruction from the CPU 10, reads data, and stores the read data in the RAM 30. The storage medium 50 is, for example, a nonvolatile readable/writable storage medium, and a flash memory in this embodiment.

As described in detail later, the CPU 10 of the data reading device in this embodiment instructs the DMA controller 40 to execute a data reading procedure in order to identify the location (in other words, a physical address) where desired data are stored in the storage medium 50 prior to processing (reading or deleting) the data.

FIG. 2 is a block diagram showing the configuration of the DMA controller 40. The DMA controller 40 comprises a controller 401 (end notification means) executing a data reading procedure and multiple registers storing information used in the data reading procedure (a reading start address register 402, a reading data size register 403, an offset value register 404, a repetition upper limit value register 405, and a repetition counter register 406).

The CPU 10 stores an address from which reading starts (a reading start address) in the reading start address register 402 when the CPU 10 needs to identify the location where desired data (for example, a sector number) are stored. Furthermore, the CPU 10 stores a reading data size (for example, in bytes) presenting the size of data to be read in single reading operation in the reading data size register 403, an offset value for updating the reading start address each time single reading operation ends in the offset value register 404, and an upper limit value of the number of times of repetition of single reading operation in the repetition upper limit value register 405. Furthermore, the CPU 10 clears the repetition counter register 406 to zero. The repetition counter register 406 stores a counter value that is incremented each time a single reading operation is repeated.

Then, the CPU 10 outputs a given control signal to the DMA controller 40. Triggered by the control signal, the DMA controller 40 starts the data reading procedure. From then on, the DMA controller 40 continues to execute the data reading procedure without any control from the CPU 10 until the number of times of repetition of a single reading procedure reaches the upper limit value.

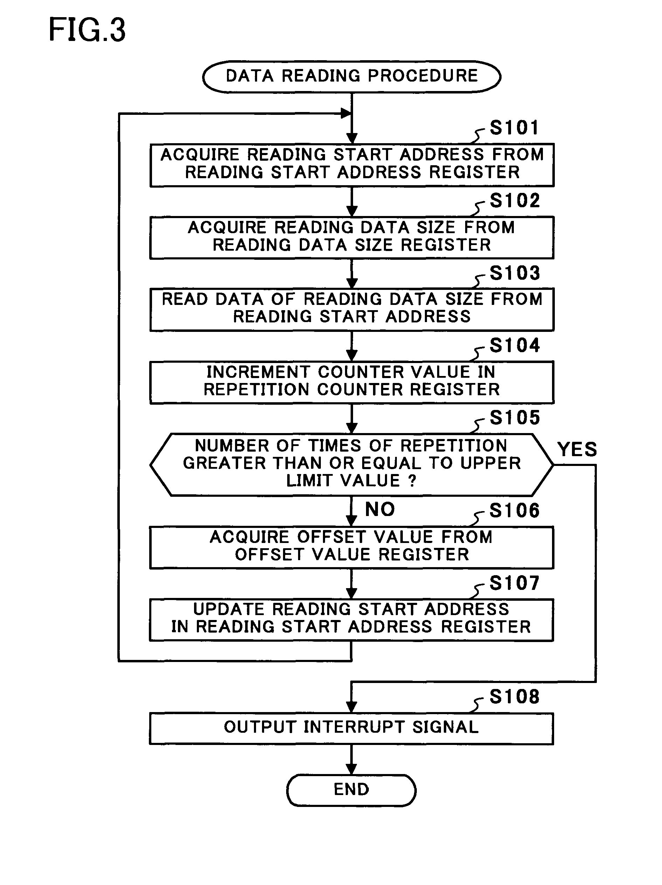

FIG. 3 is a flowchart showing the proceeding of the data reading procedure executed by the DMA controller 40. As described above, the data reading procedure starts as the CPU 10 outputs a given control signal.

First, the controller 401 of the DMA controller 40 acquires the reading start address from the reading start address register 402 (Step S101), and acquires the reading data size from the reading data size register 403 (Step S102).

Then, the controller 401 reads data of the reading data size from the memory region of the storage medium 50 indicated by the reading start address (Step S103), and stores the read data in the RAM 30. The controller 401 increments the counter value in the repetition counter register 406 when this single reading operation ends (Step S104).

Then, the controller 401 determines whether the counter value in the repetition counter register 406 (namely, the number of times of repetition) has reached the value in the repetition upper limit value register 405 (namely, the upper limit value of the number of times of repetition) (Step S 105). As a result, if the number of times of repetition has not reached the upper limit value (Step S105; NO), the controller 401 acquires the offset value from the offset value register 404 (Step S106), and adds the acquired offset value to update the reading start address in the reading start address register 402 (Step S107). Then, the controller 401 executes the processing of the Step S101 again.

On the other hand, if the number of times of repetition of a reading operation has reached the predetermined upper limit value (Step S105; YES), the controller 401 outputs a given interrupt signal (Step S108), and ends the data reading procedure.

As the above interrupt signal is output, the CPU 10 accesses the RAM 30 and finds out whether desired data are present/absent. If desired data are present, the CPU 10 identifies the location (a physical address) where the data are stored from the reading start address in the reading start address register 402 and the counter value in the repetition counter register 406 of the DMA controller 40 at the time.

On the other hand, if desired data are not present in the RAM 30, the CPU 10 stores a new reading start address in the reading start address register 402 and instructs the DMA controller 40 to execute the data reading procedure again.

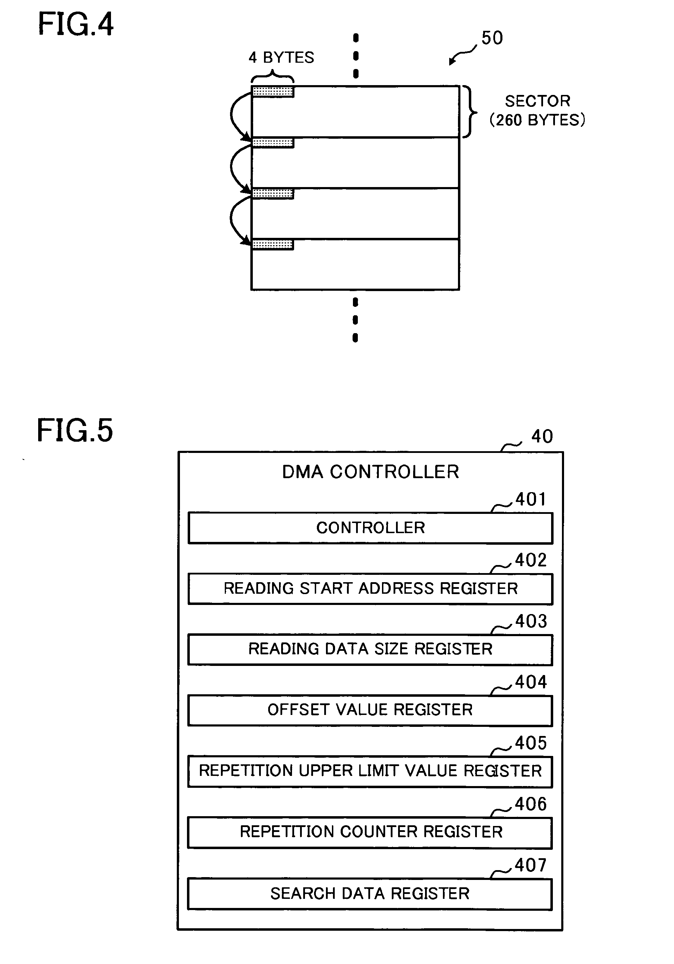

For example, as shown in FIG. 4, if data (for example, a sector number) desired by the CPU 10 are present at a given location (for example, the first 4 bytes) in each sector (for example, 260 bytes), reading all data in a sector is not efficient. However, in such a case, the DMA controller 40 of this embodiment has 4 (bytes) set in the reading data size register 403 and 260 (bytes) set in the offset value register 404; then, the reading start address skips 260 bytes each time a 4-byte reading operation ends. Therefore, data desired by the CPU 10 can be read more efficiently.

Here, the reading start address in the reading start address register 402 can be advanced by one byte each time one byte is read from the storage medium 50. In such a case, the value (for example, 256 bytes) obtained by subtracting the reading data size (for example, 4 bytes) from the sector size (for example, 260 bytes) is stored in the offset value register 404.

### (Embodiment 2)

The DMA controller according to Embodiment 2 of the present invention will be described hereafter. It is assumed that the DMA controller of Embodiment 2 is also installed in the similar data reading device as in Embodiment 1. The same components as of the data reading device of Embodiment 1 are referred to by the same reference numbers. FIG. 5 is a block diagram showing the configuration of a DMA controller 40 of this embodiment. As shown in FIG. 5, the DMA controller 40 of this embodiment additionally comprises a search data register 407. The search data register 407 stores data (for example, a sector number) desired by the CPU 10.

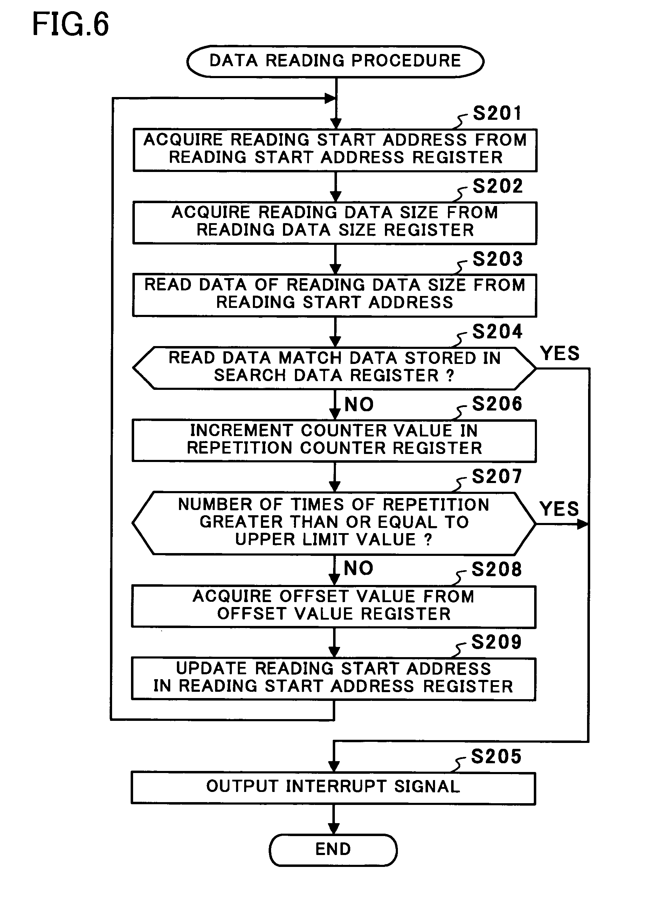

The proceeding of the data reading procedure executed by the DMA controller 40 of this embodiment will be described with reference to the flowchart of FIG. 6. This data reading procedure also starts as the CPU 10 outputs a given control signal as in Embodiment 1.

First, the controller 401 of the DMA controller 40 acquires the reading start address from the reading start address register 402 (Step S201), and acquires the reading data size from the reading data size register 403 (Step S202).

Then, the controller 401 reads data of the reading data size from the memory region of the storage medium 50 indicated by the reading start address (Step S203), and stores the read data in the RAM 30. Then, the controller 401 determines whether the read data match the data stored in the search data register 407 (Step S204).

As a result, if these data match with each other (Step S204; YES), the controller 401 outputs a given interrupt signal (Step S205), and ends the data reading procedure.

On the other hand, if these data do not match with each other (Step S204; NO), the controller 401 increments the counter value in the repetition counter register 406 (Step S206). Then, the controller 401 determines whether the counter value in the repetition counter register 406 (namely, the number of times of repetition) has reached the value in the repetition upper limit value register 405 (namely, the upper limit value of the number of times of repetition) (Step S207).

As a result, if the counter value has not reached the upper limit value (Step S207: NO), the controller 401 acquires the offset value from the offset value register 404 (Step S208), and adds the acquired offset value to update the reading start address in the reading start address register 402 (Step S209). Then, the controller 401 executes the processing of the Step S201 again.

On the other hand, if the number of times of repetition of the reading operation has reached the predetermined upper limit value (Step S207; YES), the controller 401 outputs a given interrupt signal (Step S205), and ends the data reading procedure.

As described above, as data (for example, a sector number) desired by the CPU 10 is being read, the DMA controller 40 of this embodiment outputs an interrupt signal and immediately ends the data reading procedure. Therefore, the processing can be executed more efficiently and at a higher speed.

### (Embodiment 3)

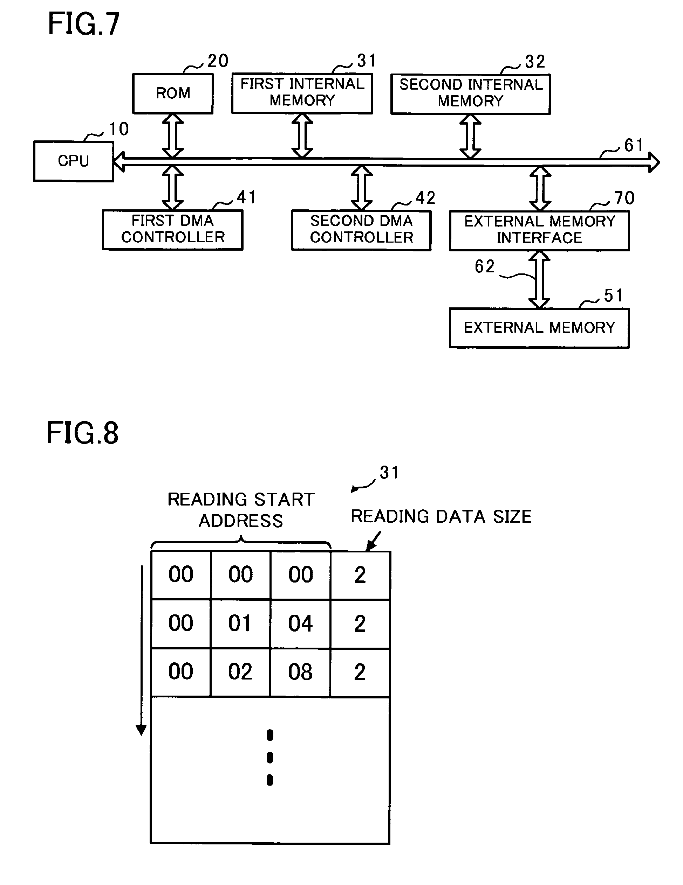

An embodiment of the data reading device of the present invention will be described hereafter. FIG. 7 is a block diagram showing the configuration of the data reading device of this embodiment. As shown in FIG. 7, the data reading device comprises a CPU 10, a ROM 20, a first internal memory 31, a second internal memory 32, a first DMA controller 41, a second DMA controller 42, an external memory interface 70, and an external memory 51.

The CPU 10, ROM 20, first internal memory 31, second internal memory 32, first DMA controller 41, second DMA controller 42, and external memory interface 70 are connected to each other via an internal bus 61. Furthermore, the external memory interface 70 and external memory 51 are connected via an external bus 62 that is a serial bus. In this embodiment, a serial flash memory is used as the external memory 51.

The CPU 10 controls the operation of the entire device including the data reading device based on various programs and data stored in the ROM 20. The first internal memory 31 is, for example, a nonvolatile readable/writable memory such as a SRAM (static random access memory). As described in detail later, the CPU 10 stores in the first internal memory 31 multiple sets of command parameters comprising a reading address and a reading data size as shown in FIG. 8.

The second internal memory 32 is, for example, a nonvolatile readable/writable memory such as a SRAM. As described in detail later, the second internal memory 32 is used as a memory storing data read from the external memory 51 and supplied to the second DMA controller 42.

Like the DMA controller 40 of Embodiment 1, the first and second DMA controllers 41 and 42 enable data reading from the external memory 51 with no interposition of the CPU 10 in order for the CPU 10 to identify the location where desired data (for example, a sector number) are stored.

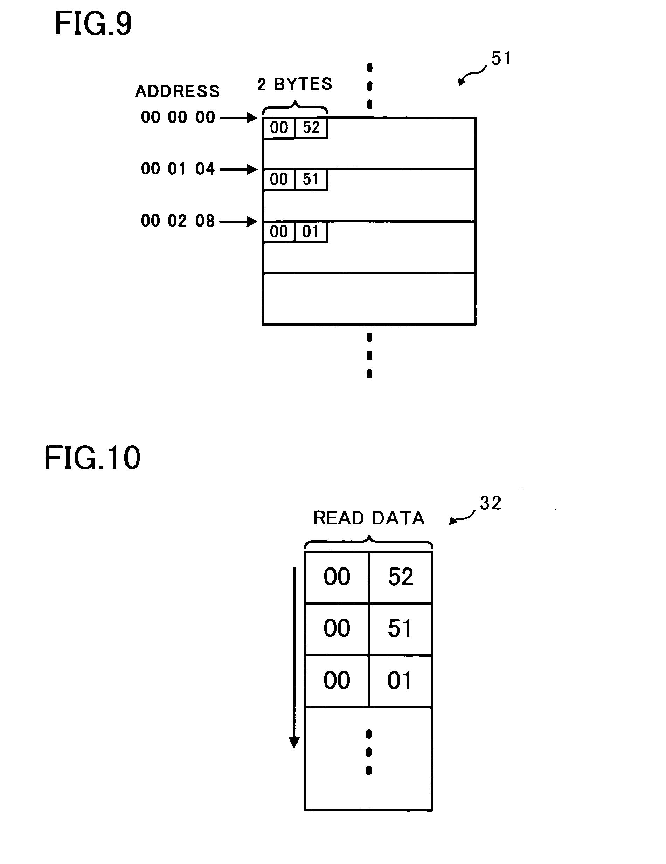

The first DMA controller 41 is activated with a given control signal from the CPU 10, acquires a set of command parameters as described above from the first internal memory 31 in sequence, and instructs the external memory interface 70 to read data based on the set of command parameters. For example, if the first set of command parameters stored in the first internal memory 31 configures a reading start address "0x000000" and a reading data size "2 (bytes)" as shown in FIG. 8, the external memory interface 70 reads data "0052h" as shown in FIG. 9. The external memory interface 70 supplies the read data to the second DMA controller 42.

The second DMA controller 42 is activated with a given control signal from the CPU 10 in sync with the first DMA controller 41. The second DMA controller 42 stores the data (the read data) supplied from the external memory interface 70 in the second internal memory 32 in sequence (see FIG. 10). The second DMA controller 42 comprises a not-shown search data register in which data (for example, a sector number) of which a location is required to be identified by the CPU 10 and are stored by the CPU 10 before the second DMA controller 42 is activated.

The second DMA controller 42 determines whether the read data received from the external memory interface 70 match the data stored in the search data register. As a result, if these data match with each other, the second DMA controller 42 outputs a given interrupt signal. In sync with the output of an interrupt signal, the first and second DMA controllers 41 and 42 stop operating.

On the other hand, if no read data are found to match the data stored in the search data register and data are continuously read from the external memory 51, then, the first DMA controller 41 ends up acquiring all sets of command parameters from the first internal memory 31. In such a case, the first DMA controller 41 outputs the above interrupt signal.

As the above interrupt signal is output from the second DMA controller 42 or from the first DMA controller 41, the CPU 10 accesses the second internal memory 32, finds out whether desired data are present/absent in the read data stored. If desired data are present, the CPU 10 identifies the location (a physical address) where the data are stored from the correspondence to the first internal memory 31 and the like.

On the other hand, if desired data are not present in the second internal memory 32, the CPU 10 clears the first internal memory 31 to zero, stores multiple new sets of command parameters, and clears the second internal memory 32 to zero. Then, the CPU 10 activates the first and second DMA controllers 41 and 42 with a given control signal again so that the controllers execute the data reading procedure.

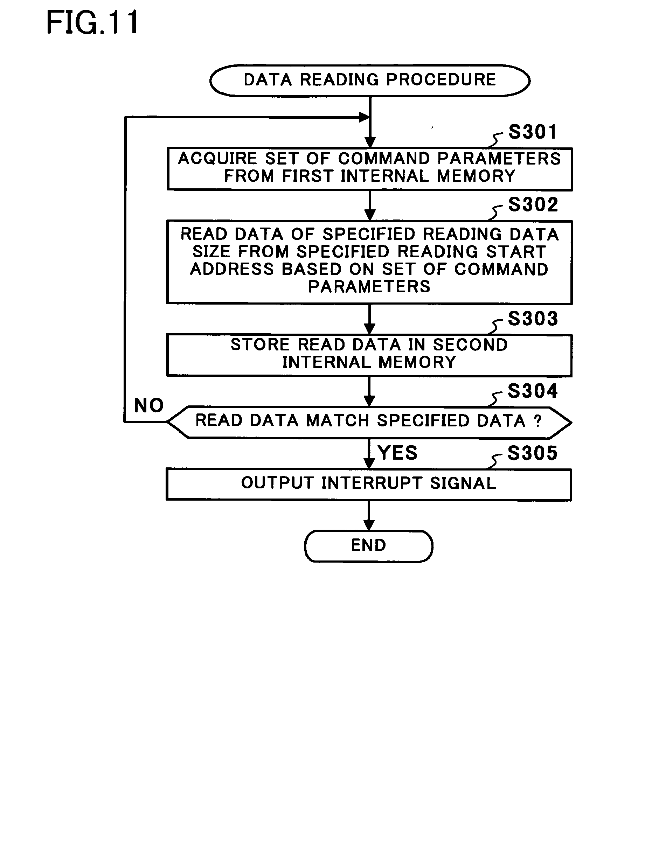

FIG. 11 is a flowchart showing the proceeding of the data reading procedure of this embodiment executed by the first and second DMA controllers 41 and 42 and external memory interface 70 cooperating with each other. As described above, this data reading procedure starts as the CPU 10 outputs a given control signal.

The first DMA controller 41 acquires a set of command parameters from the r first internal memory 31 (Step S301). Then, the first DMA controller 41 instructs the external memory interface 70 to read data based on the set of command parameter. The external memory interface 70 accesses the external memory 51 and reads data of the specified reading data size from the specified reading start address (Step S302). The external memory interface 70 supplies the data that were read (read data) to the second DMA controller 42.

The second DMA controller 42 stores the read data supplied from the external memory interface 70 in the second internal memory 32 (Step S303). Furthermore, the second DMA controller 42 determines whether the read data match data specified by the CPU 10 in advance (Step S304).

As a result, if these data match with each other (Step S304; YES), the second DMA controller 42 outputs a given interrupt signal (Step S305). In sync with the output of an interrupt signal, the first and second DMA controllers 41 and 42 stop operating, and the data reading procedure ends.

On the other hand, if these data do not match with each other (Step S304; NO), the first DMA controller 41 acquires the next set of command parameters from the first internal memory 31 (Step S301). From then on, the above processing is repeatedly executed until data matching up to the data specified by the CPU 10 are read (Step S304; YES). As described above, if the first DMA controller 41 has acquired all sets of command parameters from the first internal memory 31, the above interrupt signal is output and the data reading procedure ends.

Generally, a serial flash memory has merits such as low cost, power saving, reliable, and easy installation design, and demerits such as slow access speed. However, the access speed can be improved by providing two DMA controllers and using them as described above as in this embodiment.

Furthermore, like the DMA controller 40 of Embodiment 2, the second DMA controller 42 outputs an interrupt signal and immediately notifies the CPU 10 that data reading operation ends when data desired by the CPU 10 have been read. Therefore, the processing is executed more efficiently and at a higher speed.

Various embodiments and modifications are available to the present invention without departing from the broad sense of spirit and scope of the present invention. The above-described embodiments are given for explaining the present invention and do not confine the scope of the present invention. In other words, the scope of the present invention is set forth by the scope of claims, not by the embodiments. Various modifications made within the scope of claims and scope of significance of the invention equivalent thereto are considered to fall under the scope of the present invention.

This application is based on Japanese Patent Application No. 2010-210798, filed on September 21, 2010, and the entire specification, scope of claims, and drawings of which are incorporated herein by reference.

### Industrial Applicability

The present invention is preferably used in various electronic devices using a readable/writable storage medium such as a flash memory.

### Description of Reference Numerals

- 10: CPU
- 20: ROM
- 30: RAM
- 31: First internal memory
- 32: Second internal memory
- 40: DMA controller
- 401: Controller
- 402: Reading start address register
- 403: Reading data size register
- 404: Offset value register
- 405: Repetition upper limit value register
- 406: Repetition counter register
- 407: Search data register
- 41: First DMA controller
- 42: Second DMA controller
- 50: Storage medium
- 51: External memory
- 60: Bus
- 61: Internal bus
- 62: External bus

## Claims

1. A DMA controller (40) reading data from a readable/writable storage medium (50), comprising:
a reading start address register (402) storing a reading start address from which reading starts;
a reading data size register (403) storing the size of data to be read in a single reading operation;
an offset value register (404) storing an offset value for updating the reading start address after the reading operation ends;
**characterized by** further comprising:
a repetition upper limit value register (405) storing the upper limit value of the number of times of repetition of the reading operation;
a repetition counter register (406) storing the number of times of repetition of the reading operation; and
end notification means (401) outputting a given interrupt signal indicating that the processing of the DMA controller (40) ends when the value stored in the repetition counter register (406) reaches the value stored in the repetition upper limit value register (405);
the end notification means (401) further determines whether the data read in the reading operation match data specified in advance and, if the data match with each other, outputs the interrupt signal.

2. The DMA controller (40) according to claim 1, **characterized in that** the storage medium is a flash memory (50).

## Patentansprüche

1. DMA- (Speicherdirektzugriff-) -Steuervorrichtung (40), die Daten von einem lesbaren/beschreibbaren Speichermedium (50) liest, aufweisend:
ein Lese-Startadressen-Register (402), das eine Lese-Startadresse, ab der das Lesen beginnt, speichert;
ein Lese-Datengröße-Register (403), das die Datengröße, die in einem einzelnen Lesevorgang zu lesen ist, speichert;
ein Versatzwert-Register (404), das einen Versatzwert zum Aktualisieren der Lese-Startadresse, nachdem der Lesevorgang endet, speichert;
**gekennzeichnet dadurch, dass** sie außerdem aufweist:
ein Wiederholungs-Obergrenzen-Wert-Register (405), das den Obergrenzen-Wert der Anzahl von Wiederholungen des Lesevorgangs speichert;
ein Wiederholungs-Zähler-Register (406), das die Anzahl von Wiederholungen des Lesevorgangs speichert; und
Schluss-Benachrichtigungsmittel (401), das ein gegebenes Unterbrechungssignal ausgibt, das anzeigt, dass die Verarbeitung der DMA-Steuervorrichtung (40) endet, wenn der in dem Wiederholungs-Zähler-Register (406) gespeicherte Wert den in dem Wiederholungs-Obergrenzen-Wert-Register (405) gespeicherten Wert erreicht;
wobei das Schluss-Benachrichtigungsmittel (401) außerdem bestimmt, ob die in dem Lesevorgang gelesenen Daten mit im Voraus spezifizierten Daten übereinstimmen, und, wenn die Daten miteinander übereinstimmen, das Unterbrechungssignal ausgibt.

2. DMA-Steuervorrichtung (40) nach Anspruch 1, **gekennzeichnet dadurch, dass** das Speichermedium ein Flash-Speicher (50) ist.

## Revendications

1. Contrôleur DMA (40) qui lit des données à partir d'un support de stockage qui peut être lu / écrit (50), **caractérisé par le fait qu'**il comprend :
un registre d'adresse de début de lecture (402) qui stocke une adresse de début de lecture à partir de laquelle la lecture débute ;
un registre de taille de données de lecture (403) qui stocke la taille des données à lire en une seule opération de lecture ;
un registre de valeur de décalage (404) qui stocke une valeur de décalage de façon à mettre à jour l'adresse de début de lecture une fois que l'opération de lecture a pris fin ;
un registre de valeur de limite supérieure de répétition (405) qui stocke la valeur de limite supérieure du nombre de répétitions de l'opération de lecture ;
un registre de comptage de répétitions (406) qui stocke le nombre de répétitions de l'opération de lecture ; et
des moyens de notification de fin (401) qui délivrent en sortie un signal d'interruption donné qui indique que le traitement du contrôleur DMA (40) a pris fin lorsque la valeur stockée dans le registre de comptage de répétitions (406) atteint la valeur stockée dans le registre de valeur de limite supérieure de répétition (405) ;
les moyens de notification de fin (401) déterminent en outre si les données lues au cours de l'opération de lecture correspondent aux données spécifiées au préalable et, si les données correspondent les unes aux autres, ils délivrent en sortie le signal d'interruption.

2. Contrôleur DMA (40) selon la revendication 1, **caractérisé en ce que** le support de stockage est une mémoire flash (50).
